# EUROPÄISCHE PATENTSCHRIFT

(11) **EP 1 233 886 B1**
(45) Veröffentlichungstag und Bekanntmachung des Hinweises auf die Patenterteilung: **11.02.2004**
(21) Anmeldenummer: 00974235.4
(22) Anmeldetag: 23.11.2000
(51) Int. Cl.: B60R 13/02, B60R 13/08, B32B 7/12

(54) **FAHRZEUGDACH-AUSKLEIDUNG UND VERFAHREN ZUR HERSTELLUNG DERSELBEN**
ROOFLINING OF A VEHICLE AND A METHOD FOR PRODUCING SAME
REVETEMENT DE TOIT DE VEHICULE AUTOMOBILE ET SON PROCEDE DE PRODUCTION

(30) Priorität: 03.12.1999 CH 222199
(43) Veröffentlichungstag der Anmeldung: 28.08.2002
(73) Patentinhaber: RIETER AUTOMOTIVE (INTERNATIONAL) AG, 8702 Zollikon (CH)
(72) Erfinder: BOUKOBZA, Alain, F-95180 Menucourt (FR); DANIEL, Jean, François, F-78955 Carrière sous Poissy (FR); REYMOND, Emmanuel, F-78300 Poissy (FR); ALTS, Thorsten, D-64401 Gross Bieberau (DE)
(74) Vertreter: Felber, Josef
(86) Internationale Anmeldenummer: PCT/CH2000/000625
(87) Internationale Veröffentlichungsnummer: WO 2001/040025

(56) Entgegenhaltungen:
- EP-A- 0 255 332
- EP-A- 0 637 820
- WO-A-00/27671
- WO-A-98/18656
- WO-A-98/18657
- FR-A- 2 503 721
- US-A- 5 258 089

## Beschreibung

Die vorliegende Erfindung betrifft eine Innenauskleidung für ein Fahrzeugdach, ein Verfahren zur Herstellung derselben sowie deren Verwendung bei einem Fahrzeugdach.

Fahrzeugdach-Auskleidungen sind wichtige Komponenten für die Innenauskleidung von Fahrzeugen. Diese dienen im wesentlichen dem akustischen Verhalten des Fahrzeugs, sollten ästhetisch befriedigen und genügend steif sein, um Zubehör, wie beispielsweise Sonnenblenden, Innenbeleuchtungen, Lüftungsschlitze, Kleiderhaken usw. tragen zu können. Darüber hinaus sollen diese Auskleidungen leichtgewichtig sein, kostengünstig herstellbar sein, einfach zu montieren sein und diverse Erfordernisse (Feuerfestigkeit, Schadstoffemission usw.) erfüllen:

Grossflächige Fahrzeugteile, insbesondere Fahrzeugdächer, neigen aufgrund ihrer geringen Eigenstabilität dazu, beim Fahren zu vibrieren. Diesem Verhalten wird konventionellerweise durch das Anbringen von Dämpfungsmaterial, insbesondere bitumenhaltige Schichten, entgegengewirkt. Es werden in der Automobilindustrie seit längerem mehrschichtige Dachauskleidungsteile eingesetzt, welche nur eine ästhetische Funktion haben und als Träger von Accessoires dienen.

Eine akustisch wirksame Dachauskleidung ist bspw. in der EP-0'255'332 beschrieben und umfasst eine halbflexible Trägerschicht, mit weicher die Dachauskleidung in Art eines Schnappverschlusses gegen das Fahrzeugdach gespannt werden kann. Mit dieser Trägerschicht wird ein klassisches Feder-Masse-System mit einer federnden, schallabsorbierenden Schaumschicht und einer viskoelastischen, geschlossenporigen Schwerschicht (Bitumen-gefüllt) gegen das Fahrzeugdach angepresst.

Aus der EP-0'637'820 ist bspw. eine schallabsorbierende Dachauskleidung bekannt, welche im wesentlichen eine ca. 5-15 mm dicke, halbsteife PU-Schaumschicht und eine 4-10 mm dicke, federelastische Verbundfaserschicht aufweist, wobei beide Schichten luftdurchlässig sind. Die Schaumschicht ist bei dieser Ausführungsform beidseitig mit Glasfasern verstärkt und weist fahrgastraumseitig eine luftdurchlässige Dekorschicht auf. Die einzelnen Schichten sind wiederum mit einer luftdurchlässigen Klebschicht, insbesondere einem PU-Kleber, miteinander verbunden. Auch bei dieser schallabsorbierenden Dachauskleidung handelt es sich um ein klassisches Feder-Masse-System respektive einem klassischen Schaumabsorber.

Da es das generelle Bestreben der Automobilindustrie ist, das Gewicht der Fahrzeuge zu reduzieren, erweisen sich diese Systeme für die heutigen Anforderungen der Automobilindustrie als zu schwergewichtig. Dies hat zur Folge, dass vermehrt auch dünnere und leichtere Auskleidungsteile eingesetzt werden, die jedoch eine ungenügende akustische Wirksamkeit aufweisen, beispielsweise bei der Schallabsorption, insbesondere unter 1000 Hz.

Es sind auch mehrschichtige Fahrzeugdach-Auskleidungen bekannt, die leicht und steif sind, welche aber ebenfalls ein schlechtes akustisches Verhalten aufweisen.

So wird in der FR-2'503'721 vorgeschlagen, eine leichte Dachauskleidung zu schaffen, welche im wesentlichen aus einer porösen und glasfaserverstärkten Schaumschicht besteht, welche mit einer Dekorschicht überzogen ist und zwischen dieser Dekorschicht und der glasfaserverstärkten Schaumschicht eine luftundurchlässige Polyethylen-Folie aufweist, um das Permeieren/Durchdringen von Klebstoffkomponenten durch die Dekorschicht zu verhindern. Wegen dieser Folie weist diese vorgeschlagene Dachauskleidung eine ungenügende akustische Absorption auf, die allenfalls durch eine Perforation verbessert werden könnte. Eine solche Perforation der PE-Folie kann jedoch zu visuell wahrnehmbaren Veränderungen der Dekorschicht führen.

Es wird deshalb in der Gattungsgemässen WO-98/18657 ein ultraleichter, multifunktionaler Bausatz beschrieben, mit welchem ein exzellenter akustischer Komfort im Fahrzeuginnern erzielt werden kann, bei einer gleichzeitigen Gewichtsreduktion von ca. 50% gegenüber Auskleidungen mit klassischen Feder-Masse-Systemen und einer verbesserten ästhetischen Beständigkeit. Diese Druckschrift beschreibt den Aufbau einer akustisch und ästhetisch befriedigenden Innenauskleidung, ohne jedoch die Herstellungsweise solcher Teile zu beschreiben.

Es ist deshalb Aufgabe der vorliegenden Erfindung, eine ultraleichte Innenauskleidung der neuen Generation zu schaffen, die sich in einfacher Weise und deshalb auch kostengünstig herstellen lässt.

Insbesondere ist es Aufgabe der vorliegenden Erfindung, eine Innenauskleidung zu schaffen, welche leicht, selbsttragend, in hohem Masse akustisch wirksam sowie ästhetisch befriedigend ist und sein Aussehen langfristig bewahrt. Darüber hinaus soll die zu schaffende Innenauskleidung in einfacher Weise akustisch getrimmt werden können und für die Gestaltung der fahrgastraumseitigen Dekorschicht eine grösstmögliche Auswahl an verschiedenen Dekormaterialien zulassen.

Der Erfindung liegt damit auch die Aufgabe zugrunde, ein Verfahren zu schaffen, mit welchem leichte Innenauskleidungen, welche den jeweiligen akustischen Anforderungen und den ästhetischen Bedürfnissen entsprechend unterschiedlich ausgelegt sind, kostengünstig hergestellt werden können.

Diese Aufgabe wird erfindungsgemäss durch eine Innenauskleidung mit den Merkmalen des Anspruchs 1 gelöst, welche sich mit Hilfe eines Verfahrens gemäss Anspruch 10 herstellen lässt. Diese multifunktionelle und leichte Innenauskleidung weist eine mehrschichtige Struktur auf und umfasst eine luftdurchlässige Kernschicht, insbesondere aus einem thermoformbaren PU-Schaum, welche beidseitig mit einer luftdurchlässigen Versteifungsschicht (die wiederum aus mehreren Schichten aufgebaut sein kann) versehen ist. Fahrgastraumseitig weist diese Mehrschicht-Struktur eine luftdurchlässige Dekorschicht auf, während fahrzeugdachseitig eine luftundurchlässige Rückenschicht eingesetzt wird. Diese Schichten sind durch thermoplastische luftdurchlässige Bindemittel miteinander verbunden. Zwischen der Dekorschicht und der fahrgastraumseitigen Versteifungsschicht wird als Klebschicht vorzugsweise eine dünne, perforierte Folie verwendet, welche sich beim Herstellungsverfahren partiell öffnet und an den benachbarten Schichten haftet. Der Luftströmungswiderstand der Schichten, welche fahrgastraumseitig an der Kernschicht anliegen, kann durch die Zusammensetzung und Verdichtung (Raumgewicht) der Versteifungsschicht, geeignete Wahl der Klebeschicht und der Dekorschicht gezielt und ohne besonderen Aufwand eingestellt werden, d.h. kann in einfacher und kontrollierbarer Weise den jeweiligen Bedürfnissen angepasst werden. Erfindungsgemäss wird diese Schichtkombination derart ausgelegt, dass damit ein Luftströmungswiderstand von 500Nsm⁻³ < Rₜ < 2500Nsm⁻³, insbesondere von 900 Nsm⁻³ < Rₜ < 1900Nsm⁻³ erzeugt wird, während das Flächengewicht dieser Schichtkombination zwischen 300 und 800 gr/m² liegt. Es ist für die Optimierung der akustischen Wirksamkeit der Innenauskleidung wesentlich, dass der Luftströmungswiderstand der fahrgastraumseitig vor der Kernschicht angeordneten Schichten im angestrebten Bereich liegt. Die Dekorschicht kann aus einem Faservlies oder einem anderen luftdurchlässigen Material, z.B. einem Textilgewirk mit oder ohne dünne, offenporige Schaumschicht bestehen. Weiter ist es für die Optimierung der akustischen Wirksamkeit der Innenauskleidung wesentlich, dass, im Falle einer blechseitigen Versiegelung, die für die Versiegelung benötigte Schicht ein geringes Flächengewicht aufweist (kleiner als 50 gr/m²) und dass diese auf geeignete Weise an die übrigen Schichten der Trägerstruktur gekoppelt ist.

Diese Innenauskleidung zeichnet sich durch ein besonders gutes akustisches Verhalten aus, ist selbsttragend und ultraleicht.

Eine bevorzugte Ausführungsform weist folgende Schichtreihenfolge auf:
1. ein luftundurchlässiges Vlies (ca. 40 g/m²)
2. ein thermoformbares Vlies (200 g/m²)
3. eine Klebschicht (Netzkleber)
4. einen thermoformbaren PU-Schaumkern (ca. 20 mm dick, 200 g/m²)
5. eine Klebschicht (Netzkleber)
6. ein thermoformbares Vlies (300 g/m²)
7. eine geschlitzte PE-Folie (ca. 50 µm) oder mikroporöse Klebefaserschicht
8. ein Dekorbeläg (Faservlies mit ca. 200 g/m²)

Das oben beschriebene Ausführungsbeispiel kann vom Fachmann in einfacher Weise akustisch getrimmt werden, ohne dessen vorteilhafte Wirkungen zu beeinträchtigen. Insbesondere kann die Dicke der Kernschicht 4 den Erfordernissen angepasst werden, d.h. ein Gewicht von weniger als 200 g/m² bis zu einem Gewicht von mehr als 400 g/m² aufweisen. Die Dekorschicht 8 kann aus phantasievollen Gewirken bestehen, insbesondere gestrickte und mit oder ohne Schaumrücken versehene Schichten umfassen. Die fahrgastraumseitigen Schichten 5, 6, 7, 8 können derart angepasst werden, dass deren Luftströmungswiderstand den gewünschten akustischen Anforderungen entspricht. Durch Variation der dachblechseitigen Versteifungsschicht 2 kann die Versteifung der gesamten Auskleidung in gewünschter Weise geändert werden. Eine Variation der Zusammensetzung der Versteifungsschichten 2 und 6 liegt ebenfalls im gewöhnlichen technischen Handeln des Fachmanns. Ebenso kann die besondere Formgebung der Dachauskleidung und insbesondere eines eventuell eingeprägten Oberflächenreliefmusters an der Rückseite der Innenauskleidung frei gestaltet werden.

Das erfindungsgemässe Verfahren zur Herstellung einer derartigen Innenauskleidung weist die Merkmale des vorliegenden Anspruchs 10 auf und sieht vor, einen Stapel mit folgender Schichtfolge bereitzustellen:
- eine luftundurchlässige Rückenschicht;
- ein erstes luftdurchlässiges, thermoformbares Vlies;
- eine erste luftdurchlässige Klebschicht;
- ein luftdurchlässiger thermoformbarer PU-Schaumkern;
- eine zweite luftdurchlässige Klebschicht;
- ein zweites luftdurchlässiges thermoformbares Vlies;
- eine dritte luftdurchlässige Klebschicht;
- ein luftdurchlässiger Dekorbelag.

Dieser Stapel wird in einem nächsten Verfahrensschritt auf eine Temperatur von ca. 180°C erwärmt, um die theromplastischen Klebeschichten zu erweichen und um eine Sekundärreaktion des PU-Schaumkerns auszulösen. In einem nächsten Verfahrensschritt wird dieser aufgeheizte Stapel in ein kaltes Formwerkzeug transferiert und dort in seine gewünschte Form gebracht während sich die Sekundärreaktion des PU-Schaumkerns vollzieht und der Materialstapel auf eine Temperatur im Bereich von 20°C - 60°C abgekühlt wird. Anschliessend wird der geformte und gebundene / verklebte Stapel in die gewünschte Kontur geschnitten.

Dieses Herstellungsverfahren zeichnet sich gegenüber den herkömmlicherweise eingesetzten Verfahren dadurch aus, dass wegen der Verwendung eines thermoformbaren PU-Schaumkerns und thermoplastisch gebundener Versteifungsschichten, die Dachauskleidung mit Hilfe eines kalten Formwerkzeuges in die gewünschte Form gebracht werden kann, wobei Kleberdurchschläge nicht vorkommen. Bei diesem Verfahren wird insbesondere der erwärmte Stapel rasch in das kalte Formwerkzeug transferiert.

Dabei wird vorzugsweise der Temperaturabfall während des Transfers minimiert und es wird darauf geachtet, dass dieser Temperaturabfall an den Oberflächen weniger als 20°C beträgt und vorzugsweise weniger als 10°C beträgt.

Bei diesem Verfahren wird beispielsweise ein Stapel mit einer Gesamtdicke von 27 mm auf 180°C erwärmt. Dazu kann der Stapel auf eine Gesamtdicke von 22 mm verpresst werden. Während dieser Erwärmungsphase fangen einerseits die Kleber an zu schmelzen und andererseits wird in der PU-Kernschicht eine Sekundär reaktion ausgelöst. Das kalte Formwerkzeug, in welchem der aufgeheizte Stapel in ca. 1 Minute wieder abgekühlt wird, weist eine Temperatur von zwischen 20°C und 60°C auf. Bei diesem Abkühlungsprozess härten auch die netzartigen und/oder tröpfchenförmig verteilten Klebschichten wieder und führen zu einer Haftung der benachbarten Schichten.

Es versteht sich, dass mit diesem Verfahren die Herstellungskosten erheblich reduziert werden können. Durch die Verwendung von thermoformbaren Schäumen respektive Vliesen können Produkte erzeugt werden, die keine Schadstoffemissionen aufweisen. Darüber hinaus kann mit dem vorliegenden Verfahren auf flüssige Kleber verzichtet werden, die bei konventionellen Dachauskleidungen zu Fleckenbildungen auf der Dekorschicht führen. Ein wesentlicher Vorteil des vorliegenden Verfahrens ist darin zu sehen, dass die akustischen Eigenschaften der herzustellenden Produkte durch einfache Variation der Dicken und Zusammensetzung der einzelnen Schichten respektive Variation der Perforationsdichte der Klebschichten einstellbar sind. Damit erweist sich das vorliegende Verfahren als universell verwendbar, d.h. kann für unterschiedlich ausgelegte / dimensionierte Innenauskleidungen ohne Umstellung der Produktionslinie verwendet werden.

Die erfindungsgemäss hergestellte Innenauskleidung weist alle gewünschten Eigenschaften auf, insbesondere ist sie leichtgewichtig, d.h. weist ein Gewicht von lediglich ca. 1000 gr/m² auf, erfüllt die Anforderungen der Automobilindustrie im Zusammenhang mit der erforderlichen Eigensteifigkeit und Formstabilität, und erfüllt die Bestimmungen zum Brandschutz, zur Schadstoffemmission usw. Darüber hinaus ist die erfindungsgemässe Dachauskleidung unempfindlich gegen Feuchtigkeit, ist geruchsneutral und pilzwachstumsinhibitorisch. Das erfindungsgemässe Herstellungsverfahren ist wesentlich einfacher und damit ökonomischer als die heute bekannten Verfahren.

Bevorzugte Ausführungsformen der Dachauskleidung und des Herstellungsverfahrens weisen die Merkmale der jeweiligen Unteransprüche auf.

Im folgenden soll die Erfindung anhand der einzigen Figur und eines Ausführungsbeispiels näher erläutert werden. Es zeigt:

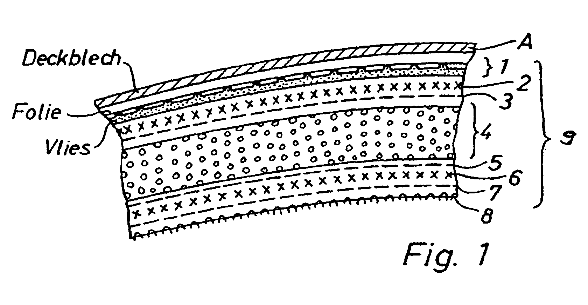

- Fig. 1: eine schematische Darstellung des Aufbaus einer erfindungsgemässen Innenauskleidung.

Die in Figur 1 beispielhaft gezeigte Ausführungsform der Innenauskleidung 9 weist eine Gesamtdicke von 20 mm auf. Diese Innenauskleidung 9 weist eine zentrale Kernschicht 4 auf, die aus einem luftdurchlässigen Material, vorzugsweise aus einem offenporigen thermoformbaren PU-Schaum besteht. Diese Schaumschicht 4 weist eine Dicke von 20 mm auf und hat ein Flächengewicht von 200 g/m². Beidseitig dieser Kernschicht 4 ist jeweils eine Versteifungsschicht 2 resp. 6 angeordnet. Diese Versteifungsschichten sind mit einer Klebeschicht 3, 5 an der Kernschicht 4 befestigt. In dieser bevorzugten Ausführungsform ist dachblechseitig eine erste Versteifungsschicht 2 mit einem Flächengewicht von 200 g/m² und fahrgastraumseitig eine zweite Versteifungsschicht 6 mit einem Flächengewicht von 300 g/m² angeordnet. Es versteht sich, dass für die Versteifungsschichten auch andere geeignete, d.h. steife Materialien verwendet werden können. Wesentlich für die vorliegende Erfindung ist es, dass die einzelnen oben genannten Schichten luftdurchlässig sind und auch die Klebschichten eine Luftdurchströmung zulassen. Fahrzeugdachseitig ist eine luftundurchlässige Rückenschicht 1, vorzugsweise ein luftdicht versiegelndes Vlies mit einem Flächengewicht von 40 g/m², vorgesehen. Mit dieser Rückenschicht 1 wird verhindert, dass Luft aus dem Fahrgastraum durch die luftdurchlässige Innenauskleidung 9 in den Raum zwischen dem Fahrzeugdach A und der Innenauskleidung 9 strömen kann, was zu Verschmutzungen führt. Fahrgastraumseitig ist eine luftdurchlässige Dekorschicht 8, bspw. ein Dekorvlies mit einem Flächengewicht von 200 g/m², angebracht. Vorzugsweise liegt zwischen der Dekorschicht 8 und der zweiten Versteifungsschicht 6 eine geschlitzte Folie 7. Diese Folie 7 öffnet sich beim Aufheizen des gesamten Stapels. Die dabei entstehende Perforationsdichte lässt sich durch die Anordnung und Dimensionierung der Schlitzung in einfacher Weise kontrollieren. Zwingend sind fahrgastraumseitig der Kernschicht liegende Schichten 5, 6, 7, 8 derart ausgelegt, dass damit die Auskleidung fahrgastraumseitig einen Luftströmungswiderstand von 500Nsm⁻³ < Rₜ < 3500Nsm⁻³, insbesondere von 900Nms⁻³ < Rₜ < 1900Nsm⁻³ bei einem Flächengewicht von 300 bis 800 gr/m² aufweist. In einer weiteren bevorzugten Ausführungsform wird die Rückenschicht 1 aus einem luftundurchlässigen Vlies oder aus einer luftundurchlässigen Folie oder einer Kombination von Vlies und Folie gebildet, und wird derart an dem Fahrzeugdach A befestigt (punktweise bzw. partiell verklebt), dass die Schallabsorption der Dachauskleidung optimiert wird. Wenn ein reliefartiges Profil in der Rückseite des Dachauskleidungsteils eingeprägt ist, kann dieses Profil auch zur punkt- oder linienförmigen Befestigung der Versiegelungsfolie benützt werden. Dieses reliefartige Profil der Auskleidungsrückseite führt dazu, dass im montierten Zustand zwischen der Dachauskleidung und dem Fahrzeugdachblech eine zusammenhängende dünne und akustisch wirksame Luftschicht entsteht. Die Dachauskleidung bewirkt somit eine Schwingungsdämpfung des Dachblechs. Die in dieser bevorzugten Ausführungsform verwendeten Versteifungsschichten bestehen aus einem Mischfaservlies, in welchem unter anderem verstärkende Fasern und/oder Fein-/Mikrofasern beigemischt sind. Ebenso können diese Versteifungsschichten koextrudierte Fasern aufweisen, welche einen Faserkern aus einem hochtemperaturschmelzenden Polyester und einen Fasermantel aus einem niedertemperaturschmelzenden Copolymer aufweisen.

Zusammenfassend erweist sich die erfindungsgemässe Innenauskleidung als besonders vorteilhaft, da diese keine Schadstoffe emittiert und ohne flüssige Kleber hergestellt werden kann, welche zu einer Fleckenbildung auf der Dekorschicht führen können. Das Herstellungsverfahren erweist sich, wegen seiner Einfachheit, als besonders robust und stabil. Das Trimmen / Anpassen der herzustellenden Innenauskleidungen ist in einfacher Weise möglich.

## Patentansprüche

1. Innenauskleidung für ein Fahrzeugdach (A) mit einer luftdurchlässigen Kernschicht (4), welche Kernschicht (4) fahrzeugdachseitig eine erste luftdurchlässige Versteifungsschicht (2) und fahrgastraumseitig eine zweite luftdurchlässige Versteifungsschicht (6) aufweist, wobei die zweite Versteifungsschicht (6) fahrgastraumseitig mit einer luftdurchlässigen Dekorschicht (8) versehen ist, **dadurch gekennzeichnet, dass** die erste Versteifungsschicht (2) fahrzeugdachseitig eine luftundurchlässige Rückenschicht (1) aufweist, und dass die erste Versteifungsschicht (2) und die Kernschicht (4) sowie die Kernschicht (4) und die zweite Versteifungsschicht (6) und die Dekorschicht (8) mit Hilfe luftdurchlässiger Klebschichten (3, 5, 7) miteinander verbunden sind, wobei zur Erzeugung einer akustisch optimierten Fahrzeugdach-Innenauskleidung, die an der Kernschicht (4) fahrgastraumseitig angeordneten Schichten (5, 6, 7, 8) einen gemeinsamen Luftströmungswiderstand im Bereich von 500Nsm⁻³ < Rₜ < 3500Nsm⁻³, insbesondere von 900Nms⁻³ < Rₜ < 1900Nsm⁻³ und ein Flächengewicht von 300 bis 800 gr/m² aufweisen.

2. Auskleidung nach Anspruch 1, **dadurch gekennzeichnet, dass** die luftdurchlässige Kernschicht (4) aus einem thermoformbaren PU-Schaum, insbesondere mit einer Dicke von 10 bis 35 mm und einer Dicke von 8 bis 30 kg/m³, gefertigt ist.

3. Auskleidung nach einem der Ansprüche 1 oder 2, **dadurch gekennzeichnet, dass** mindestens eine der Versteifungsschichten (2, 6) ein thermoplastisch gebundenes Vlies ist, insbesondere mit einem Flächengewicht von 100-250 g/m² für die erste Versteifungsschicht (2) und von 150-450 g/m² für die zweite Versteifungsschicht (6).

4. Auskleidung nach Anspruch 3, **dadurch gekennzeichnet, dass** das thermoplastisch gebundene Vlies mindestens aus Versteifungsfasern, akustisch wirksamen Fasern und Bindefasern zusammengesetzt ist.

5. Auskleidung nach Anspruch 3, **dadurch gekennzeichnet, dass** mindestens eine der Versteifungsschichten (2, 6) mehrschichtig aufgebaut ist und insbesondere eine Schicht mit hoher Dehnungsstreifigkeit und eine Schicht mit vorgegebenem Luftströmungswiderstand aufweist.

6. Auskleidung nach einem der Ansprüche 1 bis 5, **dadurch gekennzeichnet, dass** mindestens eine der Klebeschichten (3, 5, 7) aus einem Netzkleber, einer klebenden Faserschicht (Polypropelen SMMS -Spunbond/Meltblown/Meltblown/Spunbond) oder einer perforierten, insbesondere geschlitzten Folie gefertigt ist.

7. Auskleidung nach einem der Ansprüche 1 bis 6, **dadurch gekennzeichnet, dass** die Rückenschicht (1) fahrzeugdachseitig mit einem reliefartigen Profil versehen ist, und insbesondere aus einem luftundurchlässigen Vlies, mit einem Flächengewicht zwischen 20 und 80 g/m² und insbesondere von 40 g/m² besteht.

8. Auskleidung nach einem der Ansprüche 1 bis 6, **dadurch gekennzeichnet, dass** die Rückenschicht (1) eine luftundurchlässige Folie umfasst, welche eine Dicke zwischen 20 und 80µm, und insbesondere von etwa 50µm aufweist.

9. Auskleidung nach einem der Ansprüche 1 bis 8, **dadurch gekennzeichnet, dass** die Dekorschicht (8) ein Vlies, insbesondere mit einem Flächengewicht von 100 bis 300 g/m², oder einen luftdurchlässigen Stoff und/oder Schaum umfasst.

10. Verfahren zur Herstellung einer Innenauskleidung nach einem der vorhergehenden Ansprüche, **dadurch gekennzeichnet, dass** ein Stapel mit folgender Schichtfolge bereitgestellt wird:
eine luftundurchlässige Rückenschicht (1), insbesondere ein luftundurchlässiges Vlies, mit einem Flächengewicht von insbesondere etwa 40 g/m² , oder eine luftundurchlässige Folie, insbesondere eine etwa 40µm dünne Folie;
ein erstes luftdurchlässiges, thermoformbares Vlies (2), insbesondere mit einem Flächengewicht von etwa 200 g/m²; eine erste luftdurchlässige Klebschicht (3), insbesondere ein Netzkleber;
ein luftdurchlässiger, thermoformbarer PU-Schaumkern (4), insbesondere mit einer Dicke von 20 mm und einem Flächengewicht von 200 g/m²;
eine zweite luftdurchlässige Klebschicht (5), insbesondere ein Netzkleber;
ein zweites luftdurchlässiges thermoformbares Vlies (6), insbesondere mit einem Flächengewicht von 400 g/m²;
eine dritte luftdurchlässige Klebschicht (7), insbesondere eine perforierte Folie oder eine mikroporöse Klebefaserschicht;
ein luftdurchlässiger Dekorbelag (8), insbesondere mit einem Flächengewicht von 200 g/m²;
welcher Stapel in einem nächsten Verfahrensschritt,
einer Aufheizphase, auf eine Temperatur von ca. 180°C erwärmt wird, um eine Sekundärreaktion des PU-Schaumkerns auszulösen und die thermoplastischen Binder zu erweichen, dann in ein kaltes Formwerkzeug transferiert wird, und dort während der Sekundärreaktion des PU-Schaumkerns auf eine Temperatur im Bereich von 20°C - 60°C abgekühlt, verbunden, und in seine gewünschte Form verpresst wird, und anschliessend in die gewünschte Kontur zugeschnitten wird.

11. Verfahren nach Anspruch 10, **dadurch gekennzeichnet, dass** der Stapel verpresst wird, insbesondere von etwa 27 mm Gesamtdicke während der Aufheizphase auf etwa 22 mm, und dass das Aufheizen über die Pressplatten erfolgt.

12. Verfahren nach Anspruch 10 oder 11, **dadurch gekennzeichnet, dass** der erwärmte Stapel derart in das kalte Formwerkzeug transferiert wird, dass der Temperaturabfall an der Stapeloberfläche während des Transfers möglichst gering wird und insbesondere weniger als 30°C beträgt, vorzugsweise weniger als 10°C beträgt.

13. Verfahren nach einem der Ansprüche 10 bis 12, **dadurch gekennzeichnet, dass** in die Rückenschicht (1) fahrzeugdachseitig ein Reliefmuster eingeprägt wird.

14. Verwendung einer Innenauskleidung gemäss einem der Ansprüche 1 bis 9 bei einem Fahrzeugdach, **dadurch gekennzeichnet, dass** die Innenauskleidung am Fahrzeugdach lose anliegt oder mindestens partiell befestigt, insbesondere angeklebt ist.

## Claims

1. Inner lining for a vehicle roof (A) having an air permeable core layer (4), which core layer (4), on the vehicle roof side, comprises a first air permeable stiffening layer (2) and on the passenger compartment side comprises a second air permeable stiffening layer (6), whereby the second stiffening layer (6) on the passenger compartment side is provided with an air permeable decor layer (8), **characterized in that** the first stiffening layer (2) on the vehicle roof side comprises an air impermeable backing layer (1), and wherein the first stiffening layer (2) and the core layer (4), as well as the core layer (4) and the second stiffening layer (6) and the decor layer (8) are attached to each other with the aid of air permeable adhesive layers ( 3, 5, 7), whereby for producing an acoustically optimized vehicle roof inner lining, the layers (5, 6, 7, 8) arranged at the core layer (4) on the passenger compartment side have a total air flow resistance in the range of 500 Nsm⁻³ < Rₜ < 3500 Nsm⁻³, and in particular in the range of 900 Nsm⁻³ < Rₜ < 1900 Nsm⁻³ and an area weight of between 300 gr/m² to 800 gr/m².

2. The lining according to claim 1, wherein the air permeable core layer (4) is made of a thermoformable PU foam, in particular having a thickness of 10 mm to 35 mm and a density of 8 to 30 kg/m³.

3. The lining according to one of claims 1 or 2, wherein at least one of the stiffening layers (2, 6) is a thermoplastically bonded nonwoven, and in particular having an area weight of 100 gr/m² to 250 gr/m² for the first stiffening layer (2) and an area weight of 150 gr/m² to 450 gr/m² for the second stiffening layer (6).

4. The lining according to claim 3, wherein the thermoplastically bonded nonwoven is composed of at least stiffening fibers, acoustically effective fibers and bonding fibers.

5. The lining according to claim 3, wherein at lest one of the stiffening layers (2, 6) has a multi-layered structure and in particular has one layer having a high tensile stiffness and one layer having a predetermined air flow resistance.

6. The lining according to one of claims 1 to 5, wherein at least one of the adhesive layers (3, 5, 7) is made of a reticulating adhesive, an adhesive fiber layer (polypropylene SMMS - Spunbond/Meltblown/Meltblown/Spunbond) or of a perforated and in particular a slit foil.

7. The lining according to one of claims 1 to 6, wherein the backing layer (1) is provided on the vehicle roof side with a relief-like profile and in particular consists of an air impermeable nonwoven, having an area weight of between 20 to 80 gr/m² and in particular of 40 gr/m².

8. The lining according to one of claims 1 to 6, wherein the backing layer (1) comprises an air impermeable foil having a thickness of between 20 to 80µm and in particular of about 50µm.

9. The lining according to one of claims 1 to 8, wherein the decor layer (8) comprises a nonwoven, in particular having an area weight of between 100 to 300 gr/m², or comprises an air permeable fabric and/or foam.

10. A method for the manufacture of an inner lining according to one of the previous claims, wherein a stack having the following sequence of layers is provided:
an air impermeable backing layer (1), in particular an air impermeable nonwoven having an area weight of in particular about 40 gr/m² or an air impermeable foil, in particular an about 40µm thin foil;
a first air permeable, thermoformable nonwoven (2), in particular having an area weight of about 200 gr/m²;
a first air permeable adhesive layer (3), in particular a reticulating adhesive;
an air permeable, thermoformable PU foam core (4), in particular having a thickness of 20 mm and an area weight of 200 gr/m²;
a second air permeable adhesive layer (5), in particular a reticulating adhesive;
a second air permeable, thermoformable nonwoven (6), in particular having an area weight of 400 gr/m²;
a third air permeable adhesive layer (7), in particular a perforated foil or a microporous adhesive fiber layer;
an air permeable decor layer (8), in particular having an area weight of 200 gr/m²;
in a next method step, this being a heating phase, said stack is heated to a temperature of about 180°C in order to trigger a secondary reaction of the PU foam core and to soften the thermoplastic bonding materials, is transferred to a cold molding tool where, during the secondary reaction of the PU foam core, it is cooled to a temperature in the range of between 20°C to 60°C, is bonded, is pressed into the desired form and subsequently is cut into the desired contour.

11. The method according to claim 10, wherein the stack is pressed, in particular from about 27 mm total thickness during the heating phase to about 22 mm, and the heating is achieved by means of pressing plates.

12. The method according to claim 10 or 11, wherein the heated stack is transferred into the cold molding tool such that the decrease in temperature on the surface of the stack during the transfer is as slight as possible and in particular amounts to less than 30°C and preferably less than 10°C.

13. The method according to one of claims 10 to 12, wherein a relief-like profile is embossed into the backing layer (1) on the vehicle roof side.

14. Use of an inner lining according to one of the claims 1 to 9 in a vehicle roof, wherein the inner lining is loosely adjacent to or is at least partially attached to, and in particular adhesed to said vehicle roof.

## Revendications

1. Habillage intérieur pour un toit (A) de véhicule comportant une couche formant noyau (4) perméable à l'air, laquelle couche formant noyau (4) possède, du côté du toit du véhicule, une première couche de renfort perméable à l'air (2) et, du côté de l'habitacle, une seconde couche de renfort perméable à l'air (6), la seconde couche de renfort (6) étant pourvue, du côté de l'habitacle, d'une couche décorative perméable à l'air (8), **caractérisé en ce que** la première couche de renfort (2) comporte, du côté du toit du véhicule, une couche arrière imperméable à l'air (1) et que la première couche de renfort (2) et la couche formant noyau (4) ainsi que la couche formant noyau (4) et la seconde couche de renfort (6) et la couche décorative (8) sont reliées entre elles au moyen de couches adhésives perméables à l'air (3, 5, 7), et que pour la production d'un habillage intérieur, optimisé du point de vue acoustique, du toit du véhicule, les couches (5, 6, 7, 8), qui sont disposées sur la couche formant noyau (4) du côté de l'habitacle du véhicule, possèdent une résistance commune d'écoulement à l'air dans la gamme 500 Nsm⁻³ < Rₜ < 3500 Nsm⁻³, et notamment 900 Nsm⁻³ < Rₜ < 1900 Nsm⁻³ et un poids par unité de surface compris entre 300 et 800 g/m².

2. Habillage selon la revendication 2, **caractérisé en ce que** la couche formant noyau perméable à l'air (4) est formée par une mousse de polyuréthane thermoformable ayant notamment une épaisseur comprise entre 10 et 35 mm et une épaisseur comprise entre 8 et 30 kg/m³.

3. Habillage selon l'une des revendications 1 ou 2, **caractérisé en ce qu'**au moins l'une des couches de renfort (2, 6) est une nappe liée par voie thermoplastique, possédant notamment un poids par unité de surface de 100-250 g/m² pour la première couche de renfort (2) et un poids par unité de surface de 150-450 g/m² pour la seconde couche de renfort (6).

4. Habillage selon la revendication 3, **caractérisé en ce que** la nappe liée par voie thermoplastique est constituée par au moins des fibres de renfort, des fibres ayant un effet acoustique et des fibres de liaison.

5. Habillage selon la revendication 3, **caractérisé en ce qu'**au moins l'une des couches de renfort (2, 6) est formée de plusieurs couches et comporte notamment une couche possédant une résistance à l'allongement élevée et une couche présentant une résistance prédéterminée au passage de l'air.

6. Habillage selon l'une des revendications 1 à 5, **caractérisé en ce qu'**au moins l'une des couches adhésives (3, 5, 7) est constituée par un adhésif en forme de filet, une couche de fibres adhésives (polypropylène SMSS - spunbond / meltblown / metblown / spunbond) ou une feuille perforée, notamment fendue.

7. Habillage selon l'une des revendications 1 à 6, **caractérisé en ce que** la couche arrière (1) est pourvue, du côté du toit du véhicule, d'un profil en relief, et est constituée notamment par une nappe imperméable à l'air, possédant un poids par unité de surface compris entre 20 et 80 g/m² et notamment égal à 40 g/m².

8. Habillage selon l'une des revendications 1 à 6, **caractérisé en ce que** la couche arrière (1) comprend une feuille imperméable à l'air, qui possède une épaisseur comprise entre 20 et 80 µm et notamment égale à environ 50 µm.

9. Habillage selon l'une des revendications 1 à 8, **caractérisé en ce que** la couche décorative (8) est une nappe, qui possède notamment un poids par unité de surface compris entre 100 et 300 g/m², ou un matériau et/ou une mousse perméable(s) à l'air.

10. Procédé pour fabriquer un habillage intérieur selon l'une des revendications précédentes, **caractérisé en ce qu'**on forme un empilage possédant la suite de couches indiquées ci-après:
une couche arrière imperméable à l'air (1), notamment une nappe imperméable à l'air, possédant un poids par unité de surface égal notamment à environ 40 g/m², ou une feuille imperméable à l'air, notamment une feuille d'une épaisseur d'environ 40 µm;
une première nappe thermoformable perméable à l'air (2), possédant notamment un poids par unité de surface égal à environ 200 g/m²;
une première couche adhésive perméable à l'air (3), notamment un adhésif en forme de filet;
un noyau en mousse de polyuréthane thermoformable et perméable à l'air (4), possédant notamment une épaisseur de 20 mm et un poids par unité de surface de 200 g/m²;
une seconde couche adhésive perméable à l'air (5), notamment un adhésif en forme de filet;
une seconde nappe thermoformable perméable à l'air (6), possédant notamment un poids par unité de surface de 400 g/m²;
une troisième couche adhésive perméable à l'air (7) notamment une couche perforée ou une couche microporeuse de fibres adhésives;
un revêtement décoratifs perméable à l'air (8), possédant notamment un poids par unité de surface de 200 g/m²;
selon lequel on chauffe l'empilage lors d'une étape opératoire suivante, à savoir une phase de chauffage, à un température d'environ 180°C, pour déclencher une réaction secondaire du noyau en mousse de polyuréthane et pour ramollir les liants thermoplastiques, puis on transfère l'empilage dans un outil de moulage froid et on le refroidit dans cet outil, pendant la réaction secondaire du noyau de mousse en polyuréthane, à une température dans la gamme de 20°C-60°C, on le lie et on le comprime pour lui donner la forme désirée, et ensuite on le découpe pour lui donner le contour désiré.

11. Procédé selon la revendication 10, **caractérisé en ce que** l'on comprime l'empilage, pendant la phase de chauffage, notamment d'une épaisseur totale d'environ 27 mm jusqu'à environ 22 mm, et qu'on exécute le chauffage à l'aide des plateaux de presse.

12. Procédé selon la revendication 10 ou 11, **caractérisé en ce qu'**on transfère un empilage chauffé dans l'outil de moulage froid de telle sorte que la baisse de température au niveau de la surface de l'empilage pendant le transport est aussi faible que possible et notamment est inférieure à 30°C et de préférence est inférieure à 10°C.

13. Procédé selon l'une des revendications 10 à 12, **caractérisé en ce qu'**un modèle en relief est marqué par gaufrage dans la couche arrière (1) du côté du toit du véhicule.

14. Utilisation d'un habillage intérieur selon l'une des revendications 1 à 9, pour un toit de véhicule, **caractérisée en ce que** l'habillage intérieur est appliqué de façon lâche contre le toit du véhicule ou est fixé au moins partiellement, notamment par collage.
